# EUROPEAN PATENT APPLICATION

(11) **EP 3 654 263 A1**
(43) Date of publication of application: **20.05.2020**
(21) Application number: 18832348.9
(22) Date of filing: 28.03.2018
(51) Int. Cl.: G06Q 20/14, G06Q 20/24

(54) **PAYMENT MANAGEMENT SERVER, PROGRAM, AND PAYMENT MANAGEMENT METHOD**

(30) Priority: 12.07.2017 JP 2017136663
(71) Applicant: Warrantee Inc., Osaka-shi, Osaka 541-0045 (JP)
(72) Inventor: SHONO Yusuke, Osaka-shi Osaka 541-0045 (JP)
(74) Representative: Peters, Sebastian Martinus
(86) International application number: PCT/JP2018/013016
(87) International publication number: WO 2019/012752

(57) **Abstract**

[Problem] To provide a card settlement method for short-term products which is easy to use for both participating merchants and card users.

[Solution] In providing a product billed by unit time to a user, a management server 100 requests payment of the billed amount to a card company server 300 via a network. The management server 100 accepts product selection information from the user and performs a credit check with the card company server 300 for the amount corresponding to a prescribed time period comprising more than one unit of the billable unit time associated with the product selected by the user. After credit is secured for the amount corresponding to the prescribed time period, the management server 100 derives a billable period wherein the user requested to be billed during the provision period of the product, and makes a request to the card company server 300 for a single payment in full for an amount corresponding to the billable period.

## Description

### [Technical Field]

The present invention relates to a management server that bills a card company server for payment for the price of a product, a computer program for causing the same to function, and a settlement method implemented by the management server.

### [Background Art]

In recent years, with the diversification of consumer needs and the spread of the Internet, charging the price for a product (including a service) has been carried out in various ways. In particular, insurance products such as automobile insurance and personal property insurance appear on a daily basis or an hourly basis, and it is possible to make an insurance contract for a necessary period at a necessary time.

In addition, when a product is provided through the Internet, the price of the product is often paid by a card such as a credit card or a debit card. In the case of card settlement, card information and billing amount of a user are first sent to a card company from a store (card member store), and the card company then checks the validity of the card and determines whether the billing amount is within a limit amount. If the credit line is secured by the card company, the billing for the user is decided instantly, and the decided billing date and billing amount are specified in the card statement.

### [Citation List]

### [Patent Literature]

[Patent Document 1] Japanese Patent Application Publication No. 2013-015881

### [Summary of Invention]

### [Technical Problem]

Incidentally, for a product on a short-term basis such as a daily basis or an hourly basis, generally, the user specifies a period when applying for the purchase of the product, and then the store first makes a credit inquiry to the card company for an amount for the specified period. If the credit line is secured, the billing for the user is instantly decided there, and then the product is provided to the user from the store. In this way, in a general settlement process, the billing for the user from the card company is decided in a prepaid system for each payment on a daily basis or an hourly basis.

However, if the billing amount for each term is decided in the prepaid system as described above, then in a case where the user applies for the purchase of products on a short-term basis over a plurality of times, a statement sent from the card company to the user will list a plurality of billing items separately. In particular, in a case where the user frequently purchases products on a very-short-term basis, many small billing amounts are listed on the statement, and in some cases, such billing items are listed over many pages, resulting in causing a problem that it is not convenient for the user.

On the other hand, in order to solve the above problem, a post-payment settlement method is also conceivable in which in a case where a store provides a user with products on a short-term basis, a user's usage history is recorded for a certain period, and in response to reaching a predetermined closing date (for example, the end of a month), the amounts for the products having been purchased by the user by the date are billed to the card company in a lump. However, in such a case, the store may provide the user with a product even though the billing amount exceeds the limit of the card, or the store may fail to secure a credit line when making a credit inquiry to the card company on the predetermined closing date and thus billing to the card company may be rejected. As described above, the post-payment settlement method has a problem that stores take a financial risk and the stability of the business is impaired.

Therefore, an object of the present invention is to provide a card settlement method for products on a short-term basis that is easy to use for both card member stores and card users.

### [Solution to Problem]

The inventor of the present invention, as a result of earnestly examining means for achieving the above object, when a card user (user) applies for the purchase of a product on a short-term basis, the card member store makes a credit inquiry to the card company for an amount for a specified period exceeding the application period at that time so that a certain amount of more than a credit line can be secured. In addition to this, the card member store is allowed to bill in a lump the card company for payment of an amount for a period for which the user has actually made a charging request during a specified period, within the secured credit line. Then, the inventor has conceived that the problems of the conventional art can be solved based on such knowledge, and has made the present invention. Describing it in detail, the present invention has the following configuration and processes.

A first aspect of the present invention relates to a management server. The management server has a function to bill a card company server for payment of a charge amount via a network in a case where a product charged for each unit period is provided to a user. As used herein, the "product" broadly includes goods that are produced, distributed, and exchanged in economic activities, also includes various services or their information, such as insurance, leasing, concierge, and job introduction, in addition to movable property and real estate to be bought and sold. Further, the "card company server" is a server or a system which is operated by a card company, types of card include a credit card and a debit card, but the type of card is not particularly limited as long as it is a card for which a credit inquiry is required. It is to be noted that the management server and the card company server are each not limited to a server realized by a single computer, but may be distributed servers realized by a plurality of computers connected to a network.

The management server includes a communication unit, a credit inquiry unit, a charging period calculation unit, and a payment request unit. The communication unit receives selection information of the product from the user. The credit inquiry unit makes a credit inquiry to the card company server for an amount for a specified period exceeding one unit period to be charged for the product selected by the user. For example, if the product is charged on a daily basis, the credit inquiry unit can make a credit inquiry for an amount for one month. The charging period calculation unit calculates a charging period for which the user makes a charging request during an available period of the product after a credit line of the amount for the specified period is secured. More specifically, the charging period calculation unit obtains necessity information on both or at least one of a necessary period and an unnecessary period of the product from the user after a credit line of the amount for the specified period is secured, and distinguishes, based on the necessity information, between a charging period for which the user makes a charging request and a non-charging period for which the user does not make a charging request during the available period of the product to calculate a charging period. Thereafter, the payment request unit bills in a lump the card company server for payment of an amount depending on the charging period.

It is to be noted that the "unit period" referred to here is a minimum period for which a price of the product is charged, and the "specified period" is a period that is a multiple of the unit period and is also a period that is used as a basis for calculating an amount of the credit line to be secured. Further, the "available period of the product" is a period from when the user is allowed to be provided with the product (when the product becomes available) to when the user is no longer allowed to be provided with the product (when the product becomes unavailable), and clearly has a start and end. The "available period of the product" may or may not coincide with the specified period for which the credit line is secured. In the present invention, the "available period of the product" can be divided into a period in which the product is actually available for the user (necessary period) and a period in which the product is not available for the user (unnecessary period). For example, assuming an insurance product, the "available period of the product" is a period from when the user signs an insurance contract (when the insurance becomes valid) to when the user cancels the contract or when the closing date is reached (when the insurance becomes invalid). Further, for example, assuming a rental service for a product such as a DVD, the "available period of the product" is a period from when the user rents the product (when the product becomes available) to when the user returns the product (when the product becomes unavailable). Further, for example, assuming a room sharing service, the "available period of the product" is a period from when the user gets a key for a room (including an electronic key) (when the room becomes available) to when the user returns the key (when the room becomes unavailable). Further, the "charging period" is a period for which the user makes a charging request during the available period of the product. For example, assuming an insurance product, the "charging period" is a period for which the user actually makes a charging request for the insurance in a period from when the user signs an insurance contract to when the user cancels the contract (available period). For example, assuming a rental service for a product such as a DVD, the "charging period" is a period for which the user makes a charging request to actually use the product (view or brows the contents of a DVD, etc.) in a rental period for the product (available period). Further, for example, assuming a room sharing service, the "charging period" is a period for which the user makes a charging request to actually use the product (enter a room, use bath and toilet, etc.) in a period from when the user gets a key for the room to when the user returns the key (available period).

In the case of normal card settlement, a card member store makes a credit inquiry, and soon after a credit line is secured by a card company, the card member store bills the card company for payment of the same amount as the credit line, and billing to the user from the card company is decided at the same time. In this way, the credit inquiry and the billing decision are usually performed with little delay between them. However, for products on a short-term basis such as a daily basis or an hourly basis, when such a normal settlement process is performed, a lot of small billing items are listed in the statement, which is not convenient for the user. Therefore, as in the present invention, there is provided a period of time between the time when the credit line is secured and the time when the card member store bills the card company for payment of an amount, so that the card member store can bill in a lump the card company for payment of prices of products purchased by the user for a plurality of times. This allows the statement to list collected billing items in a lump, improving the convenience for the user. In addition, the card member store provides the user with products within the range of the credit line secured in advance, thereby avoiding a situation where the price of a product fails to be collected.

The management server according to the present invention preferably further includes a necessity information recording unit. The necessity information recording unit records in a storage unit necessity information on both or at least one of a necessary period and an unnecessary period of the product obtained from the user during the available period of the product. In this case, the charging period calculation unit calculates the charging period based on the necessity information recorded in the storage unit. The method for obtaining the necessity information on the product is not particularly limited. For example, in addition to the user notifying the management server of the necessary period and the unnecessary period directly as the necessity information on the product, the management server may determine the necessary period and the unnecessary period based on location information and movement information of the user. Further, user's biometric information (a heart rate, a heart sound, body temperature, blood pressure, etc.) may be acquired from a wearable device on which the user is mounted, and the management server may determine the necessary period and the unnecessary period based on the biometric information. In addition, the necessary period and the unnecessary period may be determined based on sensing information acquired from various IoT devices (e.g., sensors having a communication function attached to furniture, home appliances, electronic devices, automobiles, bicycles, pets, daily necessities, clothes, bags, etc.), as the necessity information.

In the management server according to the present invention, the necessity information preferably includes information on a location or movement of the user her/himself or an article owned by the user. As a result, for example, it is possible to automatically insure the user her/himself and a user's property only when the user goes out or is located in a predetermined place. Further, for example, it is possible to provide a sharing service and a concierge service depending on the location and the movement status of the user.

In the management server according to the present invention, the necessity determination unit may also determine both or at least one of the necessary period and the unnecessary period of the product based on communication information indicating whether the user terminal is communicating with an article having a communication function or an electronic tag attached to the article. As a result, for example, in a case where a property insurance is taken for a user's property (camera, etc.), even if the property itself does not have an Internet connection function, the property is directly connectable to a user terminal via Bluetooth (registered trademark) or the like or an electronic tag attached to the property is connectable to the user terminal, thereby making it possible to provide an insurance product only when the user goes out with the property and the user terminal. In addition, the above-described settlement function of the management server allows an insurance product and the like to be provided at an appropriate price that matches the user's behavior, such as charging the insurance product and the like only when the user goes out.

In the management server according to the present invention, the charging period calculation unit may estimate a period between the start and end of the period available for providing the product as an initial charging period, and subtract a non-charging period for which the user does not make a charging request from the initial charging period to calculate an actual charging period. In this way, subtracting the period for which the user does not need to be provided with the product from the initial charging period makes it possible to provide a charging method that easily satisfies the user. In addition, the processing load on the management server can be reduced in the aspect in which the non-charging period is subtracted from the initial charging period, as compared to an aspect in which the charging period is added.

A second aspect of the present invention relates to a program that causes a computer to function as the management server according to the first aspect described above. It is to be noted that the program may be stored in an information storage medium such as a CD-ROM.

A third aspect of the present invention relates to a settlement method. The settlement method according to the present invention is a method for a management server to bill a card company server for payment of a charge amount via a network in a case where a product charged for each unit period is provided to a user. First, the management server receives selection information of the product from the user. Next, for the product selected by the user, the management server makes a credit inquiry to the card company server for an amount for a specified period exceeding one unit period to be charged for the product selected by the user (credit inquiry step). Next, the management server calculates a charging period for which the user makes a charging request during an available period of the product after a credit line of the amount for the specified period is secured (charging period calculation step). Thereafter, the management server bills in a lump the card company server for payment of an amount depending on the charging period (settlement step).

### [Advantageous Effects of Invention]

According to the present invention, it is possible to provide a card settlement method for products on a short-term basis that is easy to use for both card member stores and card users.

### [Brief Description of Drawings]

Fig. 1 is a schematic diagram illustrating an example of a configuration of an entire settlement system.
Fig. 2 illustrates an example of a billing method for the prices of a product on a daily basis and a product on an hourly basis.
Fig. 3 is a block diagram illustrating a functional configuration example of various devices included in the settlement system.
Fig. 4 illustrates a main flow of a settlement method.
Fig. 5 illustrates a specific flow of a credit inquiry step.
Fig. 6 is a flowchart illustrating a first embodiment of a charging period calculation step.
Fig. 7 illustrates an example of a criterion for determining a charging period and a non-charging period.
Fig. 8 is a flowchart illustrating a second embodiment of a charging period calculation step.
Fig. 9 is a flowchart illustrating a third embodiment of a charging period calculation step.
Fig. 10 illustrates a specific flow of a settlement step.
Fig. 11 illustrates a specific flow of a continuous processing step.

### [Description of Embodiment(s)]

Embodiments of the present invention will be described below with reference to the drawings. The present invention is not limited to the embodiments described below, and includes any modifications of the following embodiments as appropriate in the scope obvious to those skilled in the art.

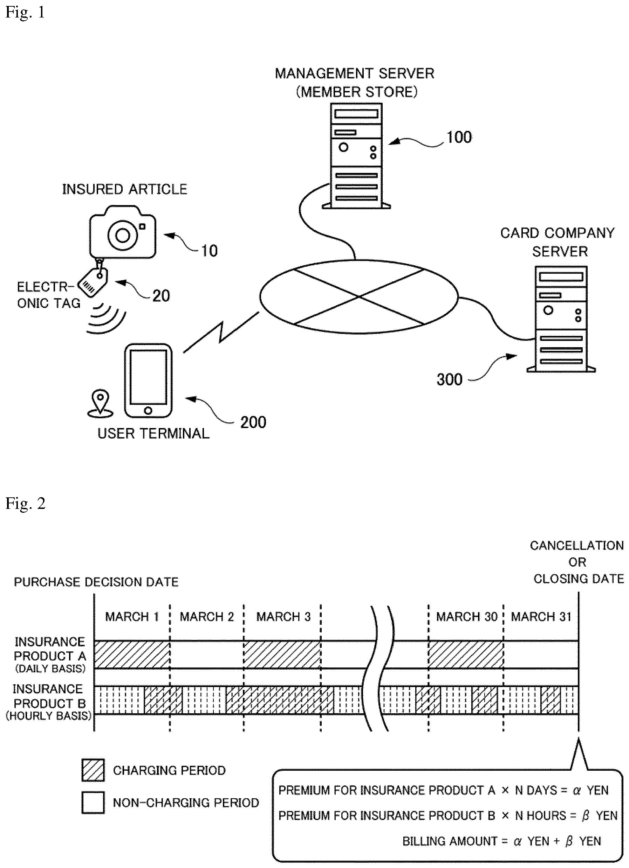

Fig. 1 illustrates an example of a configuration of an entire settlement system. As illustrated in Fig. 1, the settlement system includes a management server 100, a user terminal 200, and a card company server 300, and the servers and terminals are connected to each other so as to be able to exchange information via the Internet. The management server 100 is a web server operated by a store that provides products to a user. The store is a card member store, and is affiliated with a card company so that settlement can be made for the prices of products using a card (such as a credit card or a debit card). The user terminal 200 is a terminal device possessed by a user to which a product is to be provided. The user can apply for purchase of a product to the store using the user terminal 200, and can pay the price of the product using a card. The card company server 300 is a server or system operated by the card company. There are many card companies, but in the present invention, any card company server 300 operated by any card company can be used without any particular limitation.

In the system of the present invention, it is assumed that a store provides a product charged to a user for each unit period. Types of "products" are not particularly limited, and widely include various services and information itself in addition to movable property and real estate to be bought and sold. Examples of "products" include, but not limited to, various things such as insurance products, car rental, car sharing, taxi transport, online game membership, gym membership, concierge service, vacant space rental, music and movie streaming, Internet auctions, food and beverage services, massages, and telecommunications services.

In this description, the contents of the present invention will be specifically described by taking an insurance product as an example of a product handled in the present invention. In particular, as an example of an insurance product, a property insurance in which a user's property is an insured article is taken. In the diagram illustrated in Fig. 1, a camera owned by the user is an insured article 10. Further, the insured article 10 does not have a communication function with the user terminal 200. Accordingly, an electronic tag 20 is attached to the insured article 10. The user terminal 200 can receive a radio signal output from the electronic tag 20. It is to be noted that if the insured article 10 itself has a communication function with the user terminal 200, the electronic tag 20 may be omitted.

The settlement system of the present invention is suitable for settlement of products that are charged for each short term. Such a product is illustrated in Fig. 2 by way of example. As illustrated in Fig. 2, insurance product A is a type of product that is charged on a daily basis, and insurance product B is a product that is charged on an hourly basis. That is, insurance product A has a premium for one day, and insurance product B has a premium for one hour. It is to be noted that the unit of charging is not limited to one day or one hour, but any period of time can be set for charging, such as 3 hours, 6 hours, 12 hours, 2 days, 3 days, 1 week, and 1 month. However, it can be said that the present invention is suitable for products that are charged for each short term of 3 days or less.

The outline of the settlement method according to the present invention will be described with reference to Fig. 2. For example, insurance product A on a daily basis is taken by way of example. In the case of conventional card settlement, when a user applies for insurance for one day to a store on March 1, the store makes a credit inquiry to the card company for the amount of insurance product A for one day, and billing for the amount is decided instantly in response to securing a credit line. Similarly, when the user applies for insurance for one day to a store on March 3, a credit inquiry for the amount for one day is made and the billing amount is decided instantly. In this case, the amount for March 1 and the amount for March 3 are separately listed on the user's card statement. Further, the same applies to insurance product B on an hourly basis. Although the user can apply for insurance for a duration such as 6 hours or 17 hours, in the case of conventional card settlement, the billing amount for 6 hours and the billing amount for 17 hours will be listed separately in the user's card statement. In this regard, many users are reluctant to make the card statement complicated or small amounts billed in detail, and there is a potential need to demand that the amounts of products that have been charged by a predetermined closing date are billed in a lump on that date. Therefore, as illustrated in Fig. 2, the present invention allows the user to freely take out the insurance on a daily basis or a hourly basis in the period from the first application date (purchase decision date) of the insurance product to the predetermined closing date or cancellation of the contract, and after the predetermined closing date or the cancellation date, further bills the user for the amounts that have been charged by that date in a lump. Specifically, the billing amount of insurance product A (α yen) is calculated by "premium of insurance product A × N days". Similarly, the billing amount of insurance product B (β yen) is calculated by "premium of insurance product B × N hours". The store can bill the user for payment of a collective amount such as α yen or β yen. It is also possible to ask for payment of α yen + β yen. It can be said that such a way of settlement is advantageous for both the user (card user) and the store (card member store). A configuration for realizing such a settlement method will be described below in detail.

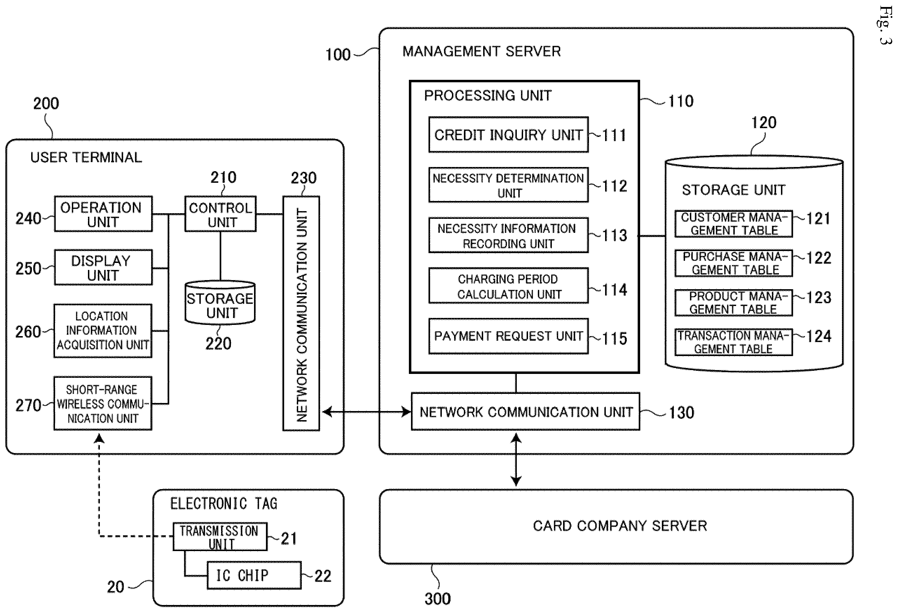

Fig. 3 is a block diagram illustrating a functional configuration of each device included in the settlement system. As illustrated in Fig. 3, the management server 100 is connected to the user terminal 200 and the card company server 300 via the Internet. Further, the user terminal 200 can receive a radio signal output from the electronic tag 20. It is to be noted that in Fig. 3, the management server 100 is illustrated as if various functional blocks are aggregated into one web server, but the management server 100 may be of a distributed type in which the functional blocks are distributed over a plurality of web servers. Further, there are usually provided a plurality of user terminals 200 and a plurality of electronic tags 20. Further, the card company server 300 that cooperates with the management server 100 is not limited to one type, and the management server 100 may also cooperate with a plurality of types of card company servers 300.

The management server 100 manages information related to products to be provided to the user. Further, the management server 100 performs a settlement process with the card company server 300 when the user selects card settlement for payment of the price of a product.

The management server 100 includes a processing unit 110, a storage unit 120, and a network communication unit 130. As the processing unit 110, a processor such as a CPU or a GPU can be used. The processing unit 110 reads a server program stored in the storage unit 120 and controls other elements according to the program to execute the operation process of the entire system. The storage unit 120 functions as a database that stores various types of information necessary for the system operation. The storage function of the storage unit 120 can be realized by a nonvolatile memory such as an HDD and an SSD. Further, the storage unit 120 may have a function as a memory for writing or reading, for example, the progress of the arithmetic processing of the processing unit 110. The memory function of the storage unit 120 can be realized by a volatile memory such as a RAM or a DRAM. The network communication unit 130 has a function of communicating with the user terminal 200 and the card company server 300 through a communication line such as the Internet. The communication standard may be in accordance with a known standardized standard, and is not particularly limited.

The user terminal 200 is operated by the user, and transmits an instruction to select, purchase, or cancel a product to the management server 100. Examples of the user terminal 200 include a portable information terminal such as a smartphone, a laptop computer, and a tablet terminal, and a stationary information terminal such as a desktop computer. The user terminal 200 includes a control unit 210, a storage unit 220, a network communication unit 230, an operation unit 240, a display unit 250, a location information acquisition unit 260, and a short-range wireless communication unit 270. The control unit 250 can be realized by a processor such as a CPU or a GPU. The storage unit 220 can be realized by a non-volatile memory such as an HDD or an SSD, or a volatile memory such as a RAM or a DRAM. The network communication unit 230 has a function of communicating with the management server 100 through a communication line such as the Internet. The operation unit 240 includes an input device, such as a mouse, a keyboard, a touch panel, and a microphone, to receive operation information from a person. The display unit 250 is a display device such as a liquid crystal display or an organic EL display. The display unit 250 may form a touch panel display together with the operation unit 240. An example of the location information acquisition unit 260 is a GPS position measurement unit having a function of performing position measurement using the GPS (Global positioning System). The short-range wireless communication unit 270 receives a wireless signal from the electronic tag 20 according to a known standard such as Bluetooth (registered trademark).

The storage unit 220 of the user terminal 200 stores an application program dedicated to the present system and a general-purpose web browser program. When such programs are started, the user terminal 200 is allowed to access the management server 100 via a dedicated application or a web browser to receive information from the management server 100, and transmit information to the management server 100. The information received from the management server 100 is displayed on the display unit 250 of the user terminal 200. Further, when the user inputs necessary information via the operation unit 240, the information is transmitted to the management server 100 via the network communication unit 230. In this way, the management server 100 exchanges information with the user terminal 200.

The card company server 300 performs a process of checking the limit of amount for the card settlement of a user (card member) to secure a credit line in response to receiving a request to make a credit inquiry from the management server 100, and a process of paying the required amount to a store (card member store) that operates the management server 100 and withdrawing the amount paid to the store from the user's bank account. As the card company server 300, a known configuration can be adopted.

The electronic tag 20 is attached to the insured article 10 in a case where the insured article 10 cannot communicate with the user terminal 200. The electronic tag 20 is realized by, for example, a wireless signal transmitter using such as Bluetooth (registered trademark) or RFID (Radio Frequency IDentification), to communication with the user terminal 200 through non-contact short-range wireless communication using an electromagnetic field, a radio wave, and the like. In the present invention, the electronic tag 10 can be configured from a circuit of, for example, a passive type, a semi-passive type, or a similar structure.

The electronic tag 20 basically includes a transmission unit 21 and an IC chip 22. The IC chip 22 stores ID information (tag ID) unique to the electronic tag 20 or the insured article 10 to which the electronic tag 20 is attached. The transmission unit 21 transmits the tag ID stored in the IC chip 22 on a radio signal. For example, the electronic tag 20 of passive type receives radio waves transmitted from the user terminal 200, converts the received radio waves into an electromotive force by an antenna coil or a Schottky diode, and activates the IC chip 22 by the electromotive force. When activated, the IC chip 22 reads the unique tag ID stored therein and transmits the tag ID to the user terminal 200 via the transmission unit 21. Since the passive electronic tag 20 converts radio waves into an electromotive force to operate, it does not require a power source (for example, a battery), and has an advantage that it is inexpensive to manufacture and can also be used almost permanently. Further, the electronic tag 20 of semi-passive type may also be used. The semi-passive electronic tag 20 receives a radio wave transmitted from the user terminal 200, and activates an internal power supply in response to the radio wave. Then, it uses the power obtained from the power source to activate the IC chip 21 and transmit the unique tag ID to the user terminal 200. It is to be noted that the short-range wireless communication between the electronic tag 10 and the user terminal 200 may be performed according to a known standard such as Bluetooth (registered trademark).

Next, the functional configuration of the management server 100 will be described in detail. As illustrated in Fig. 3, in the storage unit 120 of the management server 100, a customer management table 121, a purchase management table 122, a product management table 123, and a transaction management table 124 are stored. In the customer management table 121, personal information such as user's name, home address, e-mail address, telephone number, and friendship (friends and relatives) is recorded in association with a user ID unique to the user. Further, in the customer management table 121, one or a plurality of addresses of the storage location (home, etc.) of the insured article 10 can be recorded. In the purchase management table 122, information (product name, model number, manufacturer name, date of manufacture, etc.) related to the product purchased by each user is recorded in association with the user ID. Products recorded in the purchase management table 122 can be set to objects to be insured by property insurance. In the product management table 123, information related to each insurance product is recorded in association with an insurance ID unique to the insurance product. Information related to the insurance product includes, for example, information related to details, special contracts, and premium of the insurance product. Further, in a case where the premium varies depending on the type and state of the insured article, information related to the calculation standard for the premium is also recorded in the product management table 123. In the transaction management table 124, information related to the type of insurance (insurance ID) currently contracted by each user, the contract period or the contract start and contract end, and a reserved next contract period or past contract history is recorded in association with the user ID unique to the user. Further, in a case where the user terminal 200 cooperates with the electronic tag 20, information related to a period during which the user terminal 200 communicates with the electronic tag 20 or a period during which they do not communicate with each other is sequentially recorded along with the tag ID of the electronic tag 20 in the transaction management table 124.

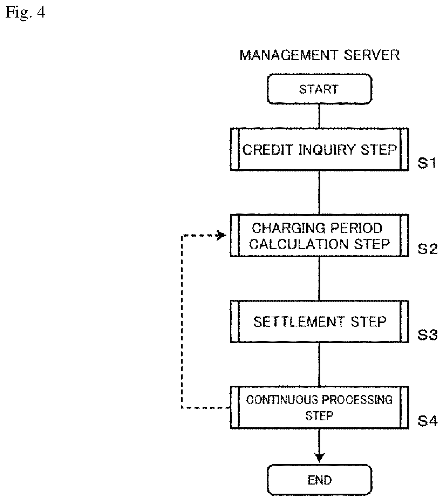

The processing unit 110 of the management server 100 can perform a process of determining a period during which an insurance product is available for the user and a process of settling the price of the insurance product, while registering information in the tables 121 to 124 included in the storage unit 120 described above, or referring to and updating the information registered in the tables 121 to 125. Specifically, as illustrated in Fig. 3, the processing unit 110 of the management server 100 includes a credit inquiry unit 111, a necessity determination unit 112, a necessity information recording unit 113, a charging period calculation unit 114, and a payment request unit 115. Hereinafter, respective functional configurations 111 to 115 of the processing unit 110 will be described in detail with reference to the flowcharts illustrated in Fig. 4 and subsequent figures.

Fig. 4 is a main flow illustrating the settlement method according to the present invention. The settlement method of the present invention includes a credit inquiry step (step S1), a charging period calculation step (step S2), a settlement step (step S3), and a continuous processing step (step S4). In the credit inquiry step, when the user makes an application for taking out an insurance product, the management server 100 makes a credit inquiry to the card company server 300 for an amount for a specified period exceeding one unit period to be charged. In other words, the management server 100 requests the card company server 300 to secure a credit line for an amount larger than the amount for one insurance product. In the charging period calculation step, the management server 100 calculates a charging period for which the user makes a charging request during an available period of the product after the credit line is secured. In the settlement step, the management server 100 bills in a lump the card company server 300 for payment of an amount depending on the charging period. In this way, in the present invention, the settlement is temporarily put on hold after the credit line is secured in the card company server 300, and the user can freely apply for (charge) an insurance product during the hold period. The continuous processing step is a process of automatically renewing the contract when the credit line is secured again after the settlement. The continuous processing step is an optional process and may be omitted if the user does not want it.

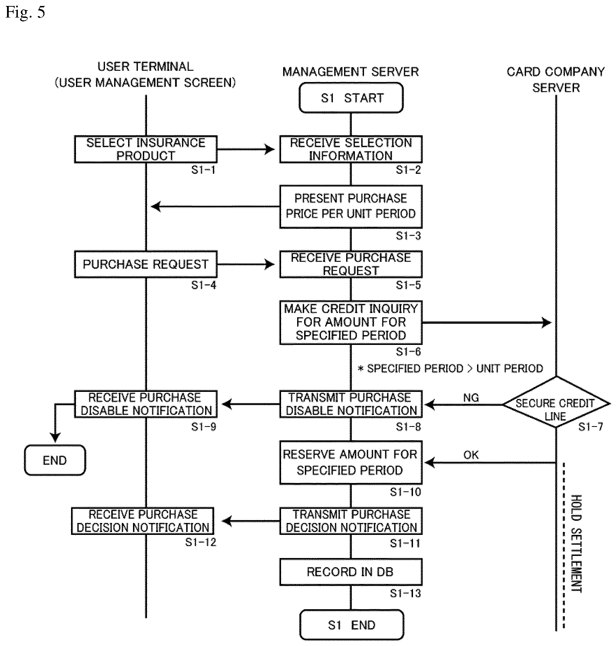

Fig. 5 illustrates a detailed flow of the credit inquiry step (step S1). First, the user selects an insurance product that the user desires to purchase by operating the user terminal 200 (step S 1-1). In selecting the insurance product, the contract period of the insurance product, such as a daily basis or an hourly basis, is selected, the details or a special contract of the insurance is selected, and the type and state of the insured article 10 to be insured (the period of use, frequency of use, presence and absence of failure, etc.) are input. The user terminal 200 transmits the information related to the insured article 10 to the management server 100 together with the information related to the insurance product selected by the user. The management server 100 receives the insurance product selection information transmitted from the user terminal 200 (step S1-2). Next, the management server 100 presents the purchase amount of the product per unit period to the user based on the product selection information (step S1-3). For example, when an insurance product on a daily basis is selected by the user, the management server 100 may present an amount per day, or may present an amount for a contract period selected by the user (e.g., a total amount for 2 days). The purchase amount is displayed on the user terminal 200. Thereafter, when the user agrees to the purchase amount, the agreement is input to the user terminal 200, and a purchase request is transmitted from the user terminal 200 to the management server 100 (step S1-4). The management server 100 receives the purchase request from the user terminal 200 (step S1-5).

Subsequently, the credit inquiry unit 111 of the management server 100 makes a credit inquiry to the card company server 300 for a specified period exceeding at least one unit period to be charged (step S1-6). For example, when the user requests to purchase an insurance product on a daily basis, the specified period that is the basis for calculating the amount for which the credit inquiry is made is 2 days or more. In particular, the specified period is preferably 3 days or more, and more preferably 1 week or 1 month. Further, for example, in a case where a specific day of each month is a closing date for card billing, a period from a date when a purchase request is made by the user to the closing date of the card can be set as the specified period. Further, when the user makes a purchase request for a plurality of unit periods at a time, the credit inquiry unit 111 of the management server 100 makes a credit inquiry to the card company server 300 for an amount for a specified period exceeding the total of the unit periods requested by the user. For example, when the amount of one insurance product for one day (unit period) is 100 yen and the user requests to purchase the product for 5 days, the credit inquiry unit 111 calculates an amount for a specified period of at least 6 days or more, preferably, an amount for 30 days (3,000 yen), and makes a credit inquiry to the card company server 300 for the calculated amount. In this way, the credit inquiry unit 111 of the management server 100 makes a credit inquiry for a specified period exceeding the period for which the user makes the purchase request, and requests the card company server 300 to secure a larger credit line for settlement.

Subsequently, when receiving the credit inquiry request from the management server 100, the card company server 300 determines whether or not the credit line can be secured for the amount requested by the management server 100 (step S1-7). More specifically, the card company server 300 checks the validity and the like of the card used by the user, and then checks whether the billing amount from the management server 100 is within the limit of amount of the card. If the billing amount is within the limit of amount, the card company server 300 secures the credit line for the billing amount. It is to be noted that the check of the limit of amount is to determine whether or not the total of the credit line already secured and the credit line to be secured this time is within the limit of amount. Through such processing, if the card company server 300 determines that the credit line cannot be secured, the card company server 300 notifies the management server 100 of the credit line disabled. In that case, the management server 100 transmits a notification notifying that the purchase of the insurance product is disabled to the user terminal 200 (step S1-8), and the user terminal 200 receives the notification (step S1-9). If the credit line cannot be secured, the settlement method ends. On the other hand, when the card company server 300 determines that the credit line can be secured, the card company server 300 notifies the management server 100 of the credit line enabled. When receiving the notification of successful securing of the credit line, the management server 100 reserves the credit line for the specified period for which the credit inquiry is made (step S1-10). Thereafter, the card company server 300 is in a state where the settlement process for the corresponding product is held until the management server 100 bills the card company server 300 for payment.

Subsequently, the management server 100 notifies the user terminal 200 that the purchase of the product has been decided (step S1-11), and the user terminal 200 receives this notification (step S1-12). At the time when the purchase decision notification is notified to the user terminal 200, the contract period of the insurance product (i.e., the available period of the insurance product) starts. Further, the management server 100 records in the storage unit 120 that the purchase of the insurance product by the user has been decided (step S1-13). Specifically, the processing unit 110 of the management server 100 records in the transaction management table 124 of the storage unit 120 the type of insurance (insurance ID) that each user currently contracts and the contract period or the contract start and contract end, along with the user ID of the user who started the contract.

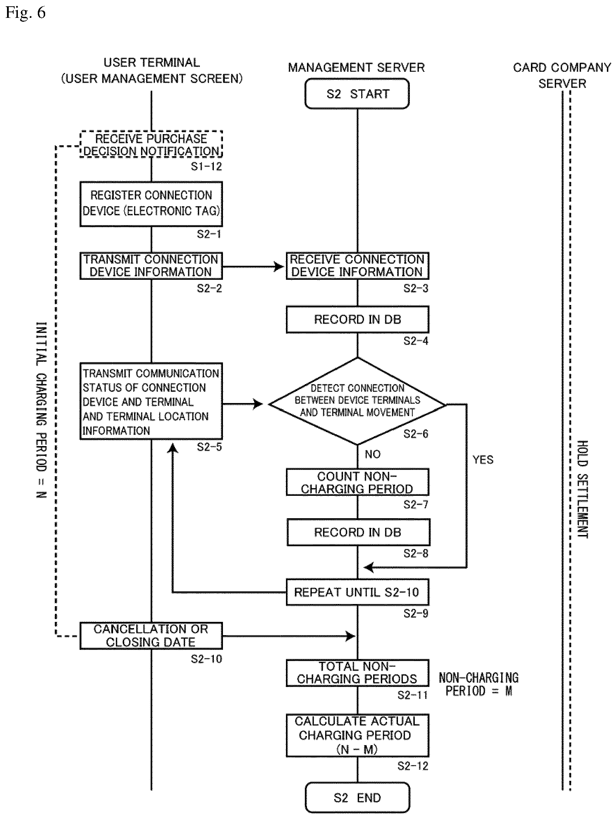

Fig. 6, Fig. 8, and Fig. 9 each illustrate detailed flows of the charging period calculation step (step S2). Fig. 6, Fig. 8, and Fig. 9 illustrate different embodiments of the charging period calculation step. As the charging period calculation step, any of the embodiments illustrated in Fig. 6, Fig. 8, and Fig. 9 can be adopted.

Fig. 6 illustrates a first embodiment of the charging period calculation step. In the first embodiment, the management server 100 performs a process of specifying a period (non-charging period) during which the insured article 10 does not need to be insured based on the information related to the communication state between the electronic tag 20 attached to the insured article 10 and the user terminal 200 and the location information of the user terminal 200, and subtracting the non-charging period from an initial charging period to calculate an actual charging period. That is, in the present embodiment, the management server 100 specifies, as the initial charging period, the period from when the user terminal 200 receives the purchase decision notification (step S1-12) to when the insurance contract is cancelled or the contract closing date is reached (step S2-10). If there is nothing in particular, the user will be billed for the initial charging period. On the other hand, when a condition occurs in which it is assumed that the insurance is not necessary for the user during the initial charging period, the period during which the condition occurs (non-charging period) is specified, and the non-charging period is subtracted from the initial charging period.

First, the user terminal 200 receives a radio signal output from the electronic tag 20, and registers the tag ID of the electronic tag 20 in the storage unit 220 (step S2-1). Thereafter, the user terminal 200 transmits information related to the electronic tag 20 (tag ID and the like) to the management server 100 (step S2-2), and the management server 100 receives the information (step 2-3). The management server 100 records the information such as the tag ID obtained from the user terminal 200 in the storage unit 120 (step S2-4). Specifically, the processing unit 110 of the management server 100 records the tag ID of the electronic tag 20 in the transaction management table 124 of the storage unit 120. As a result, the management server 100 can identify the electronic tag 20 attached to the insured article 10.

Subsequently, the user terminal 200 acquires the current location of the terminal itself by the location information acquisition unit 260 and checks the communication state with the electronic tag 20 through the short-range wireless communication unit 270. The communication state is on/off information indicating whether or not the user terminal 200 can receive a wireless signal output from the electronic tag 20 through the short-range wireless communication unit 270. Then, the user terminal 200 transmits the information (on/off information) related to the communication status with the electronic tag 20 to the management server 100 along with the location information of the terminal itself.

Subsequently, the necessity determination unit 112 of the management server 100 determines based on various information received from the user terminal 200 whether or not the user terminal 200 and the electronic tag 20 are in communication with each other and the user terminal 200 is in a state of having moved (step S2-6). The state of the user terminal 200 having moved means a state in which the user has moved from the storage location of the insured article 10 specified in advance, such as the user's home. Since the address of the storage location of the insured article 10 is recorded in the customer management table 121, the necessity determination unit 112 compares the address recorded in the customer management table 121 with the current location of the user terminal 200 to determine whether or not the current location of the user terminal 200 matches the storage location of the insured article 10. In this way, the necessity determination unit 112 specifies a period (non-charging period) during which the user does not need the insurance product based on the location information of the user terminal 200 and the communication information indicating whether or not the user terminal 200 is communicating with the electronic tag 20.

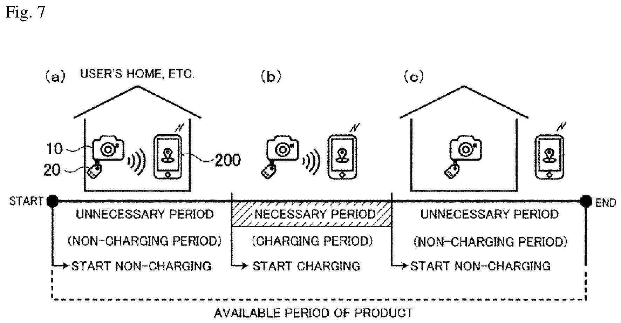

Specifically, Fig. 7 illustrates the concept of a period (necessary period) during which the user needs to use the insurance product and a period (unnecessary period) during which the user does not need to use the insurance product. For example, as illustrated in Fig. 7, the period from the start at which the user starts the contract of the insurance product to the end is the available period of the insurance product. It is to be noted that it is preferable that the available period of the product and the specified period serving as a basis for calculating the amount for which the management server 100 secures the credit line match with each other (however, the available period of the product and the specified period for which the credit line is secured does not necessarily need to match with each other). Here, as illustrated in Fig. 7(a), when the user terminal 200 is in the user's home or the like during the available period of the product and the user terminal 200 is in communication with the electronic tag 20 attached to the insured article 10, it can be assumed that the user does not go out of the user's home and the insured article 10 is also not taken out of the storage location. Therefore, in such a case, the necessity determination unit 112 of the management server 100 determines that it is not necessary to insure the insured article 10 and specifies the period in that state as the unnecessary period of the insurance product. On the other hand, as illustrated in Fig. 7(b), when the user terminal 200 moves away from the user's home or the like to the outside during the available period of the product and the user terminal 200 is in communication with the electronic tag 20 attached to the insured article 10, it can be assumed that the user has gone out of the user's home or the like and has taken out the insured article 10. Therefore, in such a case, the necessity determination unit 112 of the management server 100 determines that it is necessary to insure the insured article 10 and specifies the period in that state as the necessary period of the insurance product. Further, as illustrated in Fig. 7(c), when the user terminal 200 is moving away from the user's home or the like to the outside during the available period of the product but the user terminal 200 is not in communication with the electronic tag 20 attached to the insured article 10, the user has gone out of the user's home or the like but is most likely to leave the insured article 10 in the user's home or the like, that is, not to take out the insured article 10. Therefore, in such a case, the necessity determination unit 112 of the management server 100 determines that it is not necessary to insure the insured article 10 and specifies the period in that state as the unnecessary period of the insurance product. In this way, the necessary period and the unnecessary period of the insurance product can be determined based on the location information of the user terminal 200 and the communication state between the user terminal 200 and the electronic tag 20. Then, the necessary period of the insurance product is set as the charging period for which the price is charged, and the unnecessary period of the insurance product is set as the non-charging period for which the price is not charged.

Subsequently, when the necessity information recording unit 113 of the management server 100 determines that the movement of the user terminal 200 and the communication state with the electronic tag 20 are not detected, the necessity information recording unit 113 counts the period (non-charging period) in that state (step S2-7). In other words, the necessity information recording unit 113 measures the time during which the unnecessary period (non-charging period) of the insurance product is continued. Then, the necessity information recording unit 113 records information related to the non-charging period in the transaction management table 124 of the storage unit 120 (step S2-8). For example, the necessity information recording unit 113 records the date and time on which the non-charging period starts and the date and time on which the non-charging period ends in the transaction management table 124. Alternatively, the date and time on which the non-charging period starts and the time during which the non-charging period is continued may be recorded.

The process of specifying the non-charging period (steps S2-5 to S2-8) described herein is repeated until the insurance contract is canceled or the contract closing date is reached (step S2-10) (step S9). When the cancellation date or the contract closing date is reached, the available period of the insurance product is temporarily terminated.

Thereafter, the charging period calculation unit 114 of the management server 100 refers to the transaction management table 124 of the storage unit 120 and totals the non-charging periods counted during the available period of the product (step S2-11). Then, the charging period calculation unit 114 calculates an actual charging period by subtracting the total value of the non-charging periods from the initial charging period (step S2-12). That is, the period from the date on which the user terminal 200 receives the purchase decision notification to the cancellation date or the closing date is the initial charging period, and that period is referred to as N. Further, the total value of the non-charging periods is referred to as M. In this case, the charging period calculation unit 114 calculates N - M accordingly. Such subtraction of the non-charging period makes it possible to calculate the charging period for which the user is actually billed.

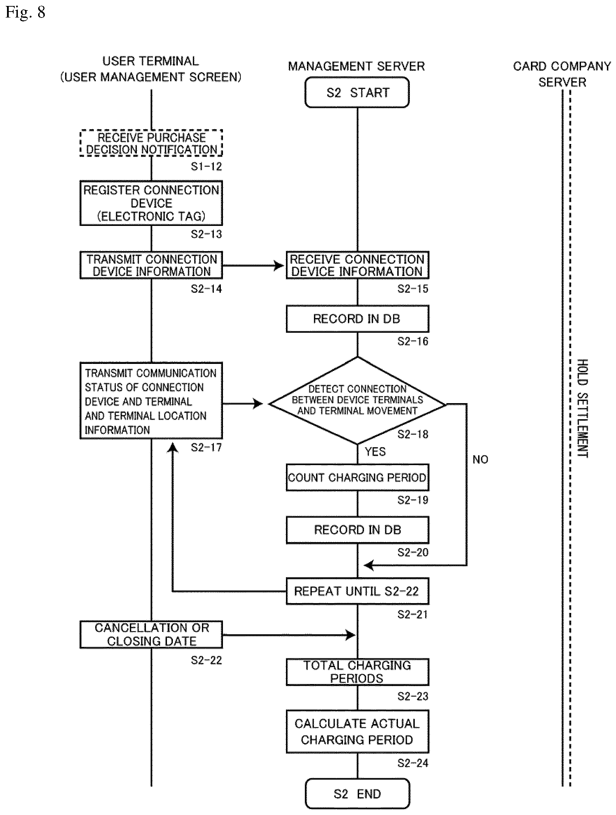

Fig. 8 illustrates a second embodiment of the charging period calculation step (step S2). In the second embodiment, the management server 100 performs a process of specifying a period (charging period) during which the insured article 10 needs to be insured based on the information related to the communication state between the electronic tag 20 attached to the insured article 10 and the user terminal 200 and the location information of the user terminal 200, and totaling the charging periods to calculate an actual charging period. That is, in the present embodiment, the insurance fee is not charged if there is nothing in particular. On the other hand, when a condition occurs in which it is assumed that the insurance is necessary for the user, the period (charging period) during which the condition occurs is specified to provide the insurance product.

Steps S2-13 to S2-17 of the second embodiment illustrated in Fig. 8 are the same as S2-1 to S2-5 of the first embodiment illustrated in Fig. 6. On the other hand, in the second embodiment, in step S2-18, when the necessity information recording unit 113 of the management server 100 determines that the movement of the user terminal 200 and the communication state with the electronic tag 20 are detected, the necessity information recording unit 113 counts the period (charging period) in that state (step S2-19). In other words, the necessity information recording unit 113 measures the time during which the necessary period (charging period) of the insurance product is continued. Then, the necessity information recording unit 113 records information related to the charging period in the transaction management table 124 of the storage unit 120 (step S2-20). For example, the necessity information recording unit 113 records the date and time on which the charging period starts and the date and time on which the charging period ends in the transaction management table 124. Alternatively, the date and time on which the charging period starts and the time during which the charging period is continued may be recorded. Further, after the cancellation date or the contract closing date, the charging period calculation unit 114 of the management server 100 refers to the transaction management table 124 of the storage unit 120 and totals the charging periods counted during the available period of the product (step S2-23). In this way, the charging period calculation unit 114 calculates the actual charging period (step S2-24). Thus, the second embodiment is different from the first embodiment in which the non-charging period is counted in that the charging period is counted.

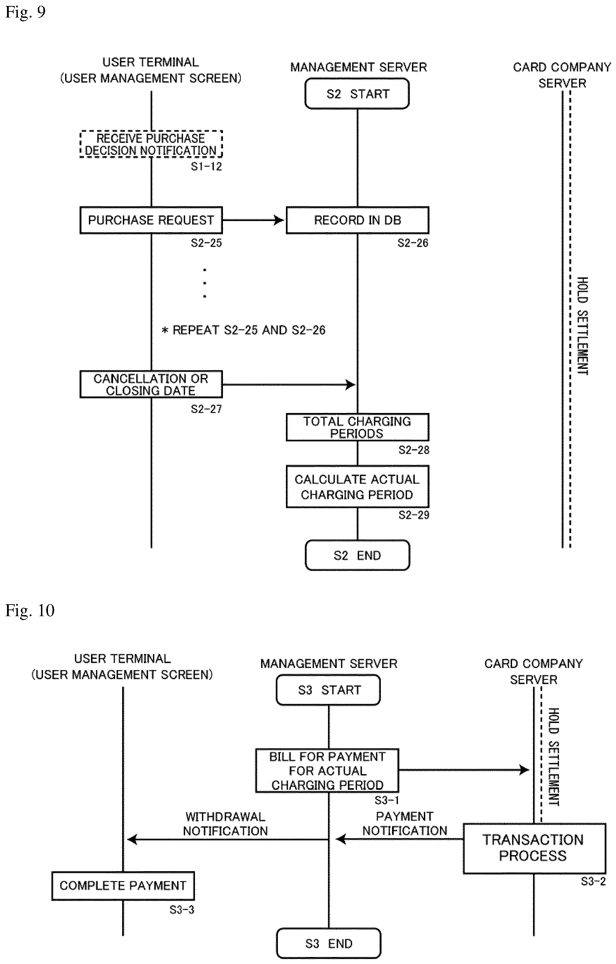

Fig. 9 illustrates a third embodiment of the charging period calculation step (step S2). The third embodiment is an embodiment assuming a case where the electronic tag 20 which is communicable with the user terminal 200 is not used or a case where the insured article 10 itself cannot communicate with the user terminal 200. In the third embodiment, during the available period of the product from the date on which the user terminal 200 receives the purchase decision notification (step S1-12) to the cancellation date or the closing date (step S2-27), the user is allowed to request the management server 100 to purchase the insurance product at any timing via the user terminal 200 (step S2-25). When transmitting the purchase request, the user terminal 200 transmits information such as the type of insurance product, the contract start date, and the contract period to the management server 100. The management server 100 records the information related to the purchase request received from the user terminal 200 in the transaction management table 124 of the storage unit 120 (step S2-26). If it is in the available period of the product, the user can repeat the purchase request for the insurance product. Then, after the cancellation date or the contract closing date, the charging period calculation unit 114 of the management server 100 refers to the transaction management table 124 of the storage unit 120 and totals the charging periods recorded during the available period of the product (step S2-28). In this way, the charging period calculation unit 114 calculates the actual charging period (step S2-29).

Fig. 10 illustrates a detailed flow of the settlement process (step S3). In the settlement process, the payment request unit 115 of the management server 100 bills in a lump the card company server 300 for payment of the amount for the actual charging period calculated in the charging period calculation step (step S2) described above (Step S3-1). As described above, if the insurance product is on a daily basis or an hourly basis, it is assumed that the charging period will be finely divided, but the payment request unit 115 calculates an amount corresponding to the total of all charging periods, and bills the card company server 300 for payment of the amount. Further, the amount for which the payment request unit 115 bills the card company server 300 in step S3-1 is the amount within the credit line secured in advance by the card company server 300 in step S1-7. That is, the billing amount does not exceed the credit line as a general rule, so that the card company also has no particular risk.

Thereafter, the card company server 300 performs a predetermined transaction process for the amount billed by the management server 100 (step S3-2). When the transaction process including the withdrawal of the amount from the bank account of the user (card user) and the transfer of the amount to the bank account of the store (card member store) is completed, the card company server 300 transmits a payment notification to the management server 100. In addition, the management server 100 may transmit a withdrawal notification to the user terminal 200. In response to this, it is also possible to display the completion of payment on the display unit of the user terminal 200 (step S3-3).

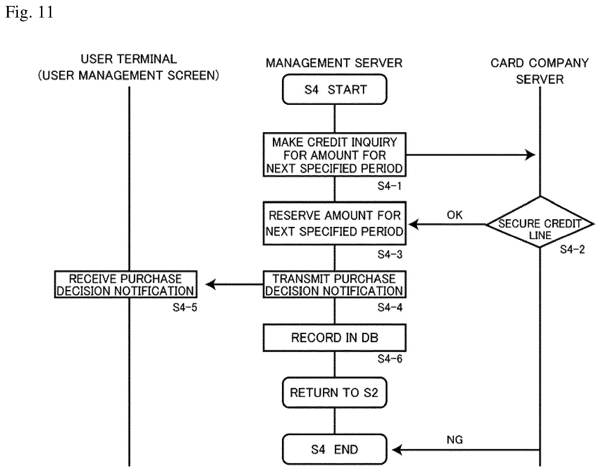

Fig. 11 illustrates a detailed flow of the continuous processing step (step S4). In the continuous processing step, for example, when the contract closing date is reached without the user canceling the insurance product contract, the contract is automatically renewed for the next specified period. However, the continuous processing step may be performed only for a user who desires automatic renewal of the contract. If the user does not desire automatic renewal, the continuous processing step is omitted and the entire settlement process ends.

As illustrated in Fig. 11, in a case where the contract is automatically renewed, the credit inquiry unit 111 of the management server 100 makes a credit inquiry to the card company server 300 for a specified period exceeding at least one unit period to be charged (step S4-1). When receiving the credit inquiry request from the management server 100, the card company server 300 determines whether or not the credit line can be secured for the amount requested by the management server 100 (step S4-2). Further, when the card company server 300 determines that the credit line can be secured, the card company server 300 notifies the management server 100 of the credit line enabled. When receiving the notification of successful securing of the credit line, the management server 100 reserves the credit line for the specified period for which the credit inquiry is made (step S4-3). Thereafter, the management server 100 notifies the user terminal 200 that the purchase of the product has been decided (step S4-4), and the user terminal 200 receives this notification (step S4-5). At the time when this purchase decision notification is notified to the user terminal 200, the contract period of the insurance product is decided to be continued. Further, the management server 100 records in the storage unit 120 (database) that the purchase of the insurance product by the user has been decided (step S4-6). When the contract of the insurance product is automatically renewed, the processing returns to the charging period calculation step (step S2) again. On the other hand, if the card company server 300 determines that the credit line cannot be secured, the entire settlement process ends without automatically renewing the contract. It is to be noted that the card company server 300 may notify the management server 100 that the credit line cannot be secured.

As described above, in the present specification, the embodiments of the present invention have been described with reference to the drawings in order to express the contents of the present invention. However, the present invention is not limited to the above-described embodiments, but includes modifications and improvements obvious to those skilled in the art based on the matters described in the present specification.

For example, the present invention can also be applied to a DVD rental service. Specifically, a DVD is rented from the store to the user for a specified period (e.g., 1 week). In this case, the period from when the user rents the DVD to return it (rental period) is the "available period of the product". Now, it is assumed that the user watches the DVD content one or more times during the DVD rental period. The watching period of time is the "charging period", and the other period of time is the "non-charging period". Accordingly, the user does not pay a fee corresponding to a rental period of 1 week, but only pays for the period of time when the content is actually watched during the rental period. As a result, it is possible to perform charging that more closely matches the actual usage of the user. The present invention can also be applied to a room sharing service. Specifically, the user rents a key (including an electronic lock) that allows for entry to a room for a specified period (e.g., 1 week) from a store. In this case, the period from when the user rents the key to return it (rental period) is the "available period of the product". Now, it is assumed that the user has entered the room for a specific time during the key rental period. The period of time during which the user enters the room is the "charging period", and the other period of time is the "non-charging period". Accordingly, the user does not pay a fee corresponding to a rental period of 1 week, but only pays for the period of time when the room is actually used during the rental period. Under the same concept, the present invention can also be applied to automobile and bicycle rental services.

### [Reference Signs List]

- 10: Insured article
- 20: Electronic tag
- 21: Transmission unit
- 22: IC chip
- 100: Management server
- 110: Processing unit
- 111: Credit inquiry unit
- 112: Necessity determination unit
- 113: Necessity information recording unit
- 114: Charging period calculation unit
- 115: Payment request unit
- 120: Storage unit
- 121: Customer management table
- 122: Purchase management table
- 123: Product management table
- 124: Transaction management table
- 130: Network communication unit
- 200: User terminal
- 210: Control unit
- 220: Storage unit
- 230: Network communication unit
- 240: Operation unit
- 250: Display unit
- 260: Location information acquisition unit
- 270: Short-range wireless communication unit
- 300: Card company server

## Claims

1. A management server that bills a card company server for payment of a charge amount via a network in a case where a product charged for each unit period is provided to a user, the management server comprising:
a communication unit that receives selection information of the product from the user;
a credit inquiry unit that makes a credit inquiry to the card company server for an amount for a specified period exceeding one unit period to be charged for the product selected by the user;
a charging period calculation unit that calculates a charging period for which the user makes a charging request during an available period of the product after a credit line of the amount for the specified period is secured; and
a payment request unit that bills in a lump the card company server for payment of an amount depending on the charging period.

2. The management server according to claim 1, further comprising
a necessity information recording unit that records in a storage unit necessity information on both or at least one of a necessary period and an unnecessary period of the product obtained from the user during the available period of the product,
wherein the charging period calculation unit calculates the charging period based on the necessity information recorded in the storage unit.

3. The management server according to claim 2, wherein
the necessity information includes information on the user her/himself or a location or movement of an article owned by the user.

4. The management server according to claim 2 or claim 3, further comprising
a necessity determination unit that determines both or at least one of the necessary period and the unnecessary period of the product based on location information of a user terminal held by the user.

5. The management server according to claim 4, wherein
the necessity determination unit determines both or at least one of the necessary period and the unnecessary period of the product based on communication information indicating whether the user terminal is communicating with an article having a communication function or an electronic tag attached to the article, in addition to the location information of the user terminal.

6. The management server according to claim 1, wherein
the charging period calculation unit estimates the available period of the product as an initial charging period, and subtracts a non-charging period for which the user does not make a charging request from the initial charging period to calculate an actual charging period.

7. A program causing a computer to function as the management server according to claim 1.

8. A settlement method for a management server to bill a card company server for payment of a charge amount via a network in a case where a product charged for each unit period is provided to a user, the settlement method comprising the steps of:
receiving, by the management server, selection information of the product from the user;
making a credit inquiry from the management server to the card company server for an amount for a specified period exceeding one unit period to be charged for the product selected by the user;
calculating, by the management server, a charging period for which the user makes a charging request during an available period of the product after a credit line of the amount for the specified period is secured; and
billing in a lump, by the management server, the card company server for payment of an amount depending on the charging period.
